(19) Europäisches Patentamt | European Patent Office | Office européen des brevets

(11) **EP 3 623 774 B1**

(12) **EUROPEAN PATENT SPECIFICATION**

(45) Date of publication and mention of the grant of the patent:
**26.05.2021 Bulletin 2021/21**

(51) Int Cl.:
***G01F 3/10*** (2006.01)

(21) Application number: **18193611.3**

(22) Date of filing: **11.09.2018**

(54) **ROTARY FLOW METER FOR MEASURING GAS FLOW**

ROTIERENDER DURCHFLUSSMESSER ZUR MESSUNG DES GASDURCHFLUSSES

DÉBITMÈTRE ROTATIF PERMETTANT DE MESURER UN ÉCOULEMENT DE GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.03.2020 Bulletin 2020/12**

(73) Proprietor: **Common Spolka Akcyjna**
**91-205 Lodz (PL)**

(72) Inventors:
- **Janeczek, Przemyslaw**
 **91-205 Lodz (PL)**
- **Kwilman, Jerzy**
 **91-205 Lodz (PL)**
- **Sierocinski, Pawel**
 **91-205 Lodz (PL)**

- **Skiba, Konrad**
 **91-205 Lodz (PL)**
- **Stasiak, Jaroslaw**
 **91-205 Lodz (PL)**

(74) Representative: **Markieta, Jaroslaw Franciszek**
**Kancelaria Rzeczników Patentowych**
**J. Markieta, M. Zielinska-Lazarowicz Sp. p.**
**Bukowinska 2 lok 160**
**02-703 Warszawa (PL)**

(56) References cited:
WO-A1-2015/183135 WO-A2-2012/112030
RU-C1- 2 660 701 US-A- 2 843 094
US-A- 4 224 015 US-A- 5 415 041
US-A- 5 415 041 US-A1- 2010 307 234
US-A1- 2016 153 819 US-B2- 8 082 784

**Description**

The present invention relates to a rotary flow meter for measuring gas flow

The invention represents the field of measuring instruments that register the volume of flowing gas.

Rotary flow meters are characterised by pulsed gas flow. Pulsation is transferred in the form of vibrations to other elements of the unit and may interfere with their operation. There are two main reasons why pulsation is generated. The first is related to the closing and opening of measurement chambers, whereby gas with a higher pressure at the inlet to the inside of the body of the flow meter is transported towards the lower pressure at the outlet from the inside of the body of the flow meter and a pressure surge occurs at the outlet side. The second type of pulsation is produced by uneven increment of volume and pressure in the spaces between the teeth of the rotors, depending on the angle of their rotation. The nature of volume changes depends for example on the shape and profile of the rotors used.

Document US4329130A discloses a rotary flow meter in which three-toothed rotors have a single curved profile, wherein both rotors have the same profile, the same size and the same twist ratio. In the solution disclosed in the American application, the profiles of the rotors are contacted during rotation, and the phenomenon of pulsation is slightly limited by reducing the mutual pressure of the rotor surfaces and the energy transfer between the rotors.

Document US5415041A discloses a device for flow measurement, with two dual helically curved rotors. The four-toothed rotors described in the American patent application rotate in mutual contact, thereby providing a high contact factor. The solution allows for limiting the generation of axial, lateral and distal loads between the rotors and as a result of changes of pressure in the measurement device.

The object of the invention is to overcome the drawbacks of the prior art solutions and to completely eliminate pulsation in the flow meter due to uneven increment of volume between the teeth of the rotors.

The essence of the solution is a rotary flow meter for measuring gas flow, comprising a pair of three-toothed rotors, each of which has the shape of a double helical gear, wherein the first rotor is a mirror reflection of the second rotor, and the rotors are adapted to rotate in opposite directions; moreover, the flow meter comprises a body sealing the rotors, adapted to form temporary measurement chambers having a strictly defined volume, formed between the outer surfaces of the rotors and the inner surface of the body. The rotary flow meter according to the invention is characterised by the rotors adapted not to contact each other and which are synchronised via an external module synchronising the rotation of the rotors.

Preferably, the flow meter is characterised by the teeth of the rotors in the shape of a double helical gear having their tops displaced along the height of the rotor by an angle ($\alpha$)

$$\alpha = \frac{360°}{2z}$$

where z is the number of teeth of the rotor.

Preferably, the flow meter is characterised by three-toothed rotors in the shape of a double helical gear interacting with the inner surface of the body over a section with an angular length expressed by the wrap angle ($\beta$)

$$\beta = \frac{540°}{z}$$

where 'z' is the number of teeth of the rotor.

Preferably, the flow meter is characterised by the adjacent teeth of the three-toothed rotors (2,3) in the shape of a H-bone gear having their tops displaced from each other by an angle(Y) of 120°.

Preferably, the flow meter is characterised by the displacement angle ($\alpha$) of the tops of the tooth of the rotor along the height of the rotor corresponding to half the displacement angle(Y) of the tops of adjacent teeth of the rotor with respect to each other.

Preferably, the flow meter is characterised by the rotors and the body of the flow meter being made of plastic in 3D printing technology.

Preferably, the flow meter is characterised by the rotors and the body of the flow meter being made of an electrically conductive plastic.

The solution of the invention is advantageous because of the complete elimination of pulsation resulting from uneven increments of volume and pressure between the teeth of the rotors achieved through the use of an external synchronising module that prevents the rotors from contacting each other. Additionally, the use of three-toothed rotors in the shape of a double helical gear with a specific displacement angle of the rotors' tops with respect to each other and a specific wrap angle, an internal balance of axial forces between the rotors has been achieved.

The subject matter of the invention is presented in greater detail in a preferred embodiment in the drawing, in which:

Fig. 1 is a schematic view of the rotary flow meter in a top view;

Fig. 2 is a view of two rotors coupled with an external synchronising module, in an isometric view;

Fig. 3 is a detailed view of the rotor of the rotary flow meter;

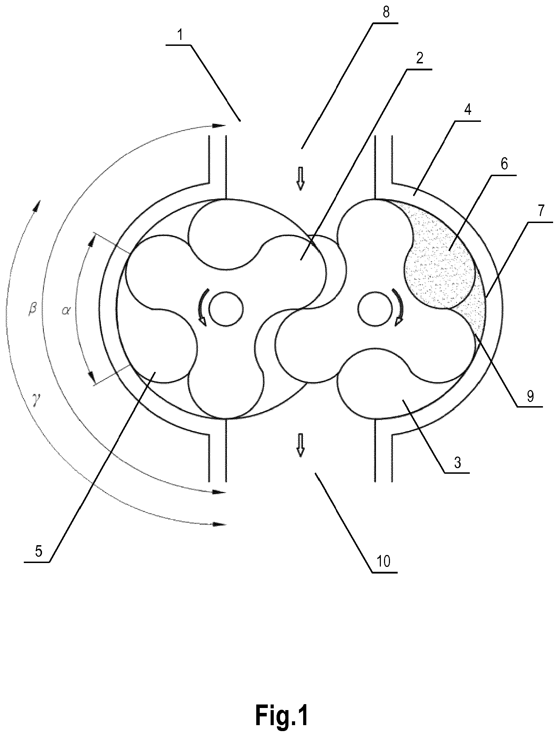

In fig. 1 is a schematic view of the rotary flow meter 1 in an embodiment, in a top view. The rotary flow meter 1 has a pair of three-toothed rotors 2, 3, adapted by an external synchronising module 11 (not shown in Fig. 1) to rotate in opposite directions. The rotors 2, 3 are arranged in the body 4 sealing the rotors 2, 3 adapted to form temporary measurement chambers 5, 6 such that the inner surface of the body 7 cooperates with the individual rotors 2, 3 over a section having an angular length expressed by the wrap angle (β). The wrap angle (β) depends directly on the number of teeth of the rotor (z) and can be calculated from the following formula:

$$\beta = \frac{540°}{z}$$

According to this embodiment of the rotary flow meter 1 with three-toothed rotors 2, 3, the wrap angle (β) is 180°, and the adjacent teeth of the three-toothed rotors 2, 3 in the shape of a double helical gear have their tops displaced from each other by an angle (γ) of 120°. The advantage achieved by using the strictly defined geometry of the rotors 2, 3 is the balance of the internal axial forces that interact between them. Moreover, according to this embodiment of the invention, body 4 is adapted to form temporary measurement chambers 5, 6 having a strictly defined volume, such that gas flowing to the inside of the body 4 through the inlet 8 fills the measurement chambers 5, 6 formed between the external surfaces of the rotors 9 and the internal surface of the body 7, and the overpressure at the inlet 8 of the gas causes the rotors 2, 3 to rotate and a portion of gas to be transported to the outlet from the inside of the body 4. The rotors (2, 3) and the body (4) of the flow meter can be made of plastic in 3D printing technology, and preferably, in particular of an electrically conductive plastic. The advantage achieved by using the 3D printing technology when making the flow meters is the ability to precisely and accurately reproduce the shape of the rotors. The use of an electrically conductive plastic is important as it regards safety and it allows for discharging the electrostatic charge accumulating in the flowing gas.

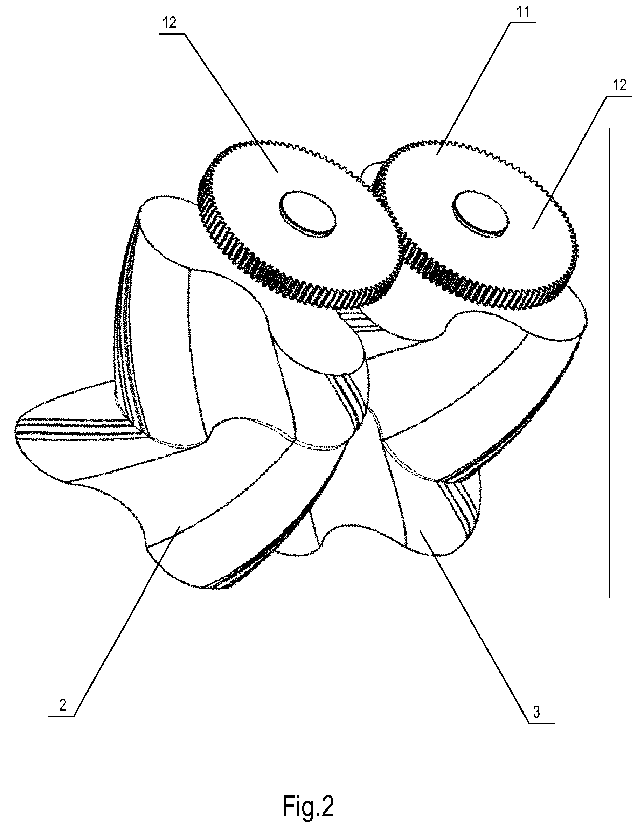

Fig. 2 is a view of two rotors 2, 3 in the shape of a double helical gear coupled with an external synchronising module 11 in an isometric view. According to this embodiment of the invention, the first rotor 2 is a mirror reflection of the second rotor 3, and, in addition, the rotors 2, 3 are adapted by an external synchronising module 11 to rotate in the opposite direction, without contacting each other, and, preferably, the second rotor 3 is adapted to rotate clockwise, and the first rotor 2 is adapted to rotate counter-clockwise. Moreover, the synchronising module 11 synchronises the rotations of the rotors 2, 3 so that the surfaces of the rotors 2, 3 do not contact each other. As shown in fig. 2 the synchronising module preferably has the form of a gear transmission with two interlocking toothed wheels 12.

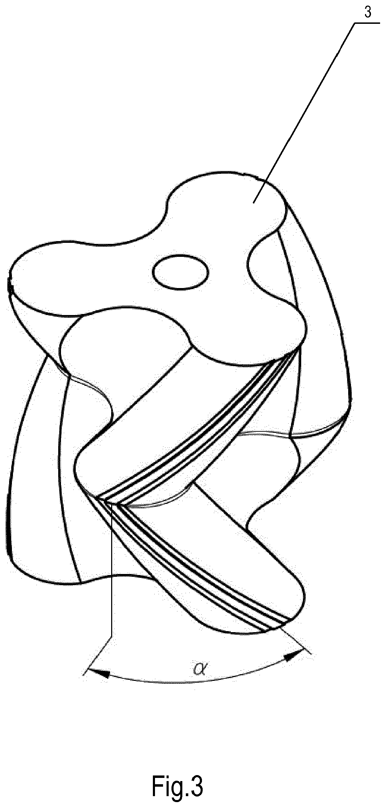

Fig. 3 is a detailed view of the rotor 3 of the rotary flow meter 1. An advantageous technical result of balancing the axial forces between the rotors 2, 3 has been achieved by using an appropriate profile and shape thereof, in particular by selecting an appropriate displacement angle (a) of the tops of the individual teeth of the rotors 2, 3. In particular, the advantageous result of balancing the axial forces is achieved when the displacement angle (α) of the tops of the tooth of the rotor 3 in relation to the height of the rotor 3 corresponds to half the angle (γ) between adjacent tops of the rotor 3. Moreover, angle (α) depends directly on the number of teeth of the rotor (z) and can be calculated based on the following ratio

$$\alpha = \frac{360°}{2z}$$

According to this embodiment of the three-toothed rotor, angle (α) has 60°.

## Claims

1. Rotary gas flow meter (1) comprising

   a pair of three-toothed rotors (2, 3), each of which has the shape of a double helical gear, wherein the first rotor (2) is a mirror reflection of the second rotor (3), and the rotors (2, 3) are adapted to rotate in opposite directions; moreover, the flow meter comprises
   a body (4) sealing the rotors (2, 3) forming measurement chambers (5, 6), formed between the outer surfaces of the rotors (9) and the inner surface of the body (7).

   **characterised in that**

   the measurement chambers (5, 6) have strictly defined volume, and
   the rotors (2, 3) are adapted not to contact each other and
   a geometry of rotors (2, 3) is adapted to provide an internal balance of axial forces, and
   the rotors (2, 3) are synchronised via an external module synchronising (11) the rotation of the rotors (2, 3).

2. The flow meter according to claim 1 **characterised in that** the teeth of the rotors (2, 3) in the shape of a double helical gear have one extremity of a tooth of the rotor along its height and the location of the same at the meeting location of the two helices of the same tooth along the height of the rotor displaced along the height of the rotor by an angle (α)

$$\alpha = \frac{360°}{2z}$$

where z is the number of teeth of the rotor.

3. The flow meter according to claim 1 or 2 **characterised in that** three-toothed rotors (2, 3) in the shape of a double helical gear interact with the inner surface of the body (7) over a section with an angular length expressed by the wrap angle (β)

$$\beta = \frac{540°}{z}$$

where z is the number of teeth of the rotor.

4. The flow meter according to any of the claims 1 to 3, **characterised in that** the adjacent teeth of the three-toothed rotors (2,3) in the shape of a double helical gear have their tops displaced from each other by an angle (γ) of 120°.

5. The flow meter according to claim 2 or 4, **characterised in that** the displacement angle (α) of the tops of the tooth of the rotor along the height of the rotor corresponds to half the displacement angle (γ) of the tops of adjacent teeth of the rotor with respect to each other.

6. The flow meter according to any of the claims 1 to 5, **characterised in that** the rotors (2, 3) and the body (4) of the flow meter being made of plastic in 3D printing technology.

7. The flow meter according to any of the claims 1 to 6, **characterised in that** the rotors (2, 3) and the body (4) of the flow meter being made of an electrically conductive plastic.

**Patentansprüche**

1. Rotationsgasdurchflussmesser (1) umfassend

ein Paar Dreizahnrotoren (2, 3), von denen jeder die Form eines Doppelschrägverzahnungsgetriebes hat, wobei der erste Rotor (2) eine Spiegelreflexion des zweiten Rotors ist (3) und die Rotoren (2, 3) sind so eingestellt, dass sie sich in entgegengesetzte Richtungen drehen; darüber hinaus umfasst der Durchflussmesser einen Körper (4), der die Rotoren (2, 3) abdichtet und Messkammern (5, 6) bildet, die zwischen den Außenflächen der Rotoren (9) und der Innenfläche des Körpers (7) ausgebildet sind.

**ist dadurch gekennzeichnet,**

**dass** die Messkammern (5, 6) ein genau definiertes Volumen haben
und die Rotoren (2, 3) so ausgelegt sind,
**dass** sie sich nicht berühren, und eine Geometrie der Rotoren (2, 3) ist angepasst, um ein internes Gleichgewicht der Axialkräfte bereitzustellen,
und die Rotoren (2, 3) werden über ein externes Modul synchronisiert, die die Drehung der Rotoren (2, 3) synchronisiert (11).

2. Der Durchflussmesser nach Anspruch 1 ist **dadurch gekennzeichnet, dass** die Zähne der Rotoren (2, 3) in Form eines Doppelschrägverzahnungsgetriebes ein Ende eines Zahns des Rotors entlang seiner Höhe und dessen Lage an der haben Treffpunkt der beiden Helices desselben Zahns entlang der Höhe des Rotors entlang der Höhe des Rotors um einen Winkel (α)

$$\alpha = \frac{360°}{2z}$$

verschoben, wobei "z" die Anzahl der Zähne des Rotors ist.

3. Durchflussmesser nach Anspruch 1 oder 2 **dadurch gekennzeichnet, dass** Dreizahnrotoren (2, 3) in Form eines Doppelschrägverzahnungsgetriebes mit der Innenfläche des Körpers (7) über einen Abschnitt mit einer ausgedrückten Winkellänge zusammenwirken durch den Wickelwinkel (β)

$$\beta = \frac{540°}{z}$$

verschoben, wobei "z" die Anzahl der Zähne des Rotors ist.

4. Der Durchflussmesser nach einem der Ansprüche 1 bis 3 ist **dadurch gekennzeichnet, dass** die benachbarten Zähnen der Dreizahnrotoren (2, 3) in Form eines Doppelschrägverzahnungsrads die Spitzen um einen Winkel (γ) von 120° voneinander versetzt sind.

5. Durchflussmesser nach Anspruch 2 oder 4, ist **dadurch gekennzeichnet, dass** der Verschiebungswinkel (α) der Zahnoberseiten des Rotors entlang der Höhe des Rotors der Hälfte des Verschiebungswinkels (γ) der Oberseiten der benachbarten Zähne des Rotors zueinander entspricht.

6. Der Durchflussmesser nach einem der Ansprüche 1 bis 5 zeichnet sich dadurch aus, dass die Rotoren (2, 3) und der Körper (4) des Durchflussmessers aus Kunststoff in 3D-Drucktechnik bestehen.

7. Der Durchflussmesser nach einem der Ansprüche 1 bis 6 ist **dadurch gekennzeichnet, dass** die Rotoren (2, 3) und der Körper (4) des Durchflussmessers aus einem elektrisch leitenden Kunststoff bestehen.

**Revendications**

1. Débitmètre rotatif de gaz (1) comprenant

   une paire de rotors à trois dents (2, 3), dont chacun a la forme d'un double engrenage hélicoïdal, dans lequel le premier rotor (2) est une réflexion dans un miroir du second rotor (3), et les rotors (2, 3) sont adaptés pour tourner dans des sens opposés ; en outre, le débitmètre comprend un corps (4) scellant les rotors (2, 3) formant des chambres de mesure (5, 6), formées entre les surfaces extérieures des rotors (9) et la surface intérieure du corps (7),

   **caractérisé en ce que**

   les chambres de mesure (5, 6) ont un volume strictement défini, et
   les rotors (2, 3) sont adaptés pour ne pas entrer en contact les uns avec les autres et une géométrie des rotors (2, 3) est adaptée pour assurer un équilibre interne des forces axiales, et
   les rotors (2, 3) sont synchronisés via un module externe synchronisant (11) la rotation des rotors (2, 3).

2. Le débitmètre selon la revendication 1 **caractérisé en ce que** les dents des rotors (2, 3) en forme de double engrenage hélicoïdal ont une extrémité d'une dent du rotor le long de sa hauteur et l'emplacement de celle-ci au point de rencontre des deux hélices de la même dent le long de la hauteur du rotor déplacée le long de la hauteur du rotor d'un angle ($\alpha$)

$$\alpha = \frac{360°}{2z}$$

   où z est le nombre de dents du rotor.

3. Le débitmètre selon la revendication 1 ou 2 **caractérisé en ce que** des rotors à trois dents (2, 3) en forme de double engrenage hélicoïdal interagissent avec la surface intérieure du corps (7) sur une section avec une ouverture d'angle exprimée avec l'angle d'enroulement ($\beta$)

$$\beta = \frac{540°}{z}$$

   où z est le nombre de dents du rotor.

4. Le débitmètre selon l'une des revendications 1 à 3, **caractérisé en ce que** les dents adjacentes des rotors à trois dents (2, 3) en forme de double engrenage hélicoïdal ont leurs sommets décalés l'un par rapport à l'autre d'un angle ($\gamma$) de 120°.

5. Le débitmètre selon la revendication 2 ou 4, **caractérisé en ce que** l'angle de déplacement ($\alpha$) des sommets des dents du rotor le long de la hauteur du rotor correspond à la moitié de l'angle de déplacement ($\gamma$) des sommets des dents adjacentes du rotor les unes par rapport aux autres.

6. Le débitmètre selon l'une des revendications 1 à 5, **caractérisé en ce que** les rotors (2, 3) et le corps (4) du débitmètre sont en plastique dans une technologie d'impression 3D.

7. Le débitmètre selon l'une des revendications 1 à 6, **caractérisé en ce que** les rotors (2, 3) et le corps (4) du débitmètre sont fabriqués en une matière plastique conductrice de l'électricité.

**Fig.1**

Fig.2

Fig.3

## REFERENCES CITED IN THE DESCRIPTION

**Patent documents cited in the description**

- US 4329130 A
- US 5415041 A